# EUROPÄISCHE PATENTSCHRIFT

(11) **EP 1 530 893 B1**
(45) Veröffentlichungstag und Bekanntmachung des Hinweises auf die Patenterteilung: **20.06.2007**
(21) Anmeldenummer: 04026133.1
(22) Anmeldetag: 04.11.2004
(51) Int. Cl.: A01D 43/08

(54) **Erntegerät**
Harvesting device
Dispositif de récolte

(30) Priorität: 05.11.2003 DE 20317022 U
(43) Veröffentlichungstag der Anmeldung: 18.05.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 0 069 898
- EP-A- 0 760 200
- DE-C1- 19 952 566

## Beschreibung

Die Erfindung bezieht sich auf ein Erntegerät zum Ernten von Mais oder dergleichen stängelartigem Erntegut nach dem Oberbegriff des Anspruchs 1. Ein derartiges, insbesondere als Vorsatzgerät für eine mobile Weiterverarbeitungseinrichtung, insbesondere eines Häckslers vorgesehenes Erntegerät dient dem Abschneiden, Aufnehmen und dem Überführen von Maispflanzen beispielsweise an eine Häckseleinrichtung.

Derartige Erntegeräte sind in verschiedensten Ausführungsformen bekannt. So ist z. B. aus der eigenen Patentschrift DE 199 52 566 C1 ein Erntegerät bekannt geworden, welches sich in vorteilhafter Weise zum Ernten von stängelartigem Erntegut mit großen Arbeitsbreiten eignet und sich dabei insbesondere durch einen möglichst geringen baulichen Aufwand und somit auch durch ein geringes Gewicht auszeichnet. Dazu ist das Erntegerät vorzugsweise mit zwei Einzugs- und Fördereinrichtungen ausgebildet, welche in ihrer längsten Ausrichtung in etwa quer zur Fahrt- und Arbeitsrichtung ausgerichtete Endlosförderer aus schwenkbeweglichen aneinandergereihten Förder- und Führungselementen umfassen. Um eine sichere Aufnahme und Führung von stängelartigem Erntegut zu erreichen, sind die Förder- und Führungselemente in mindestens zwei, in einem Abstand übereinander liegende Förder- und Führungsebenen unterteilt. In diesen Förder- und Führungsebenen sind Mitnehmer angebracht, welche in Abhängigkeit von der jeweiligen Förder- und Führungsebene entweder die Funktion einer Gegenschneide übernehmen und dadurch in Zusammenwirkung mit einem unterhalb der Förder- und Führungselemente befindlichen, feststehenden Schneidmesser eine Mäh- und Schneideinrichtung bilden oder in der Funktion eines Halters zur zuverlässigen Führung und Halterung des stängelartigen Erntegutes bei der Überführung an eine Weiterverarbeitungseinrichtung in der Art eines Häckselaggregates eines Häckslers vorgesehen sind.

Die Übergabe der Pflanzenstängel von dem Endlosförderer an die Weiterverarbeitungseinrichtung ist bei allen derartigen Erntegeräten ein besonders kritischer Punkt. Einerseits müssen die Halte- und Führungselemente das stängelartige Erntegut sicher halten und zum Übergabebereich fördern, andererseits muss im Übergabebereich eine störungsfreie restlose Übergabe vom Endlosförderer an die Weiterverarbeitungseinrichtung gewährleistet sein, um Verstopfungen zu vermeiden.

In der DE 199 52 566 C1 wird zur Lösung dieses Problems eine Abstreifeinrichtung vorgeschlagen, die durch Ihre Ausführungsform mit Öffnungen zwischen den Räumelementen und den dazu beabstandeten Halterungen der Abstreifeinrichtung, welche seitliche Durchtritte zum Abführen von nicht mehr aufnehmbaren Erntegut bilden, das sich ansonsten verstopfend vor der Eintrittsöffnung aufbauen würde und somit einen störungsfreien Gutfluss sicherstellen.

Beim Einsatz in der Praxis hat sich jedoch gezeigt, dass sich unter erschwerten Erntebedingungen und im angefeuchteten Zustand der Pflanzen an den Kanten der Räumelemente und im Bereich der Halterungen der Abstreifeinrichtung Erntegutreste aufbauen können und dann evtl. die Übergabe und den Gutfluss behindern.

Aufgabe der Erfindung ist es daher, ein Erntegerät zum Ernten von Mais oder dergleichen stängelartigem Erntegut der vorstehend genannten Art zu schaffen, bei dem die Verstopfungsgefahr im Zuführungsbereich zum Häcksler oder dergleichen Weiterverarbeitungseinrichtungen vermieden wird und somit die Betriebssicherheit des Erntegerätes verbessert wird.

Zur Lösung der gestellten Aufgabe zeichnet sich das Erntegerät der vorstehend genannten Art durch die im Anspruch 1 angegebenen Merkmale aus. Hinsichtlich der weiteren Ausgestaltung der Erfindung wird auf die weiteren Ansprüche verwiesen.

Erfindungsgemäß wird die Lösung der Aufgabe besonders durch eine sehr vorteilhafte Veränderung der Abstreifeinrichtung erreicht. Aufgabe der Abstreifeinrichtung ist nicht nur das Abstreifen und Zuführen des stängelartigen Ernteguts vom Endlosförderer im Abgabe- und Übergabebereich an die Weiterverarbeitungseinrichtung, sondern auch das Abstreifen und damit Reinigen der am Endlosförderer angeordneten nach außen gerichteten Schneid- Halte- und

Förderelemente von eventuell anhängenden oder anhaftenden Pflanzenresten wie z. B. Blättern. Dieses geschieht ebenso wie das Abführen der Pflanzenstängel beim Durchlaufen und gleichzeitigen Zurückziehen der Schneid- Halte- und Förderelemente durch die zwischen den Räumelementen der Abstreifeinrichtung gebildeten Schlitze. Da sich diese Vorgänge mit hoher Geschwindigkeit und damit auch unter hohen Druck vollziehen, kommt es dabei unter bestimmten Erntebedingungen besonders an den Kanten der Abstreifflächen der Räumelemente zu unerwünschten Erntegutanhaftungen, die sich schnell weiter aufbauen und verstopfend wirken können.

Durch die besonders vorteilhafte Gestaltung der Räumelemente der erfindungsgemäßen Abstreifeinrichtung wird einerseits die Anhaftung wirkungsvoll verringert und andererseits ein weiterer Aufbau der Anhaftungen dadurch vermieden, dass durch die Erfindung der stufenförmigen Anordnung der Räumelemente in ihrem Endbereich zur Weiterverarbeitungseinrichtung eine sehr wirksame Reinigungswirkung der Räumelemente durch den Erntegutfluss erzielt wird.

Eine weitere wirkungsvolle Verbesserung der Betriebssicherheit durch die erfindungsgemäße Abstreifeinrichtung wird durch die Verlegung der Halterungen erzielt. Durch die geschickte Anordnung der Haltepunkte für die Abstreifeinrichtung außerhalb des Zuführungsbereiches des Erntegutes zur Weiterverarbeitungseinrichtung und entsprechende Umgestaltung der Abstreifeinrichtung wird ein verstopfend wirkender Erntegutaufbau sicher verhindert.

Ein weiterer vorteilhafter Aspekt ist in der Anwendung der erfindungsgemäßen Merkmale zu sehen. So ist es beispielsweise unbedeutend, ob der Erfindung eine Einzugs- und Fördereinrichtung zugrunde gelegt ist, welche aus einzelnen, aneinander reihbaren, mit endseitigen Schwenkachsen versehenen und einen umlaufenden Endlosförderer bildenden Förder- und

Führungselementen mit nach außen gerichteten und als Gegenschneiden und/oder Halter ausgebildeten Schneid- und/oder Haltemitteln besteht oder ob die Erfindung auf eine Einzugs- und Fördereinrichtung aufbaut, welche entweder aus einer endlos umlaufenden Gliederkette mit nach außen gerichteten Schneid- und/oder Haltemitteln oder aus rotierenden Förderscheiben und/oder -trommeln gebildet ist. Ein Einsatz der erfindungsgemäßen Abstreifeinrichtung führt bei nahezu allen bekannten Einzugs- und Fördereinrichtungen zum reihenunabhängigen Ernten von Mais oder dgl. stängelartigem Erntegut zu einer zuverlässigen Verbesserung der Betriebssicherheit.

Eine detaillierte Beschreibung des Gegenstandes der Erfindung erfolgt nun anhand eines Ausführungsbeispieles

In der Zeichnung stellt im einzelnen dar:
**Fig. 1** eine perspektivische Darstellung eines erfindungsgemäßen Erntegerätes mit zwei spiegelbildlich zueinander angeordneten Einzugs- und Fördereinrichtungen in der Art von umlaufenden Endlosförderern;
**Fig. 2** eine teilweise abgebrochene Ausschnittsvergrößerung des Bereiches **X** in Fig. 1
**Fig. 3** eine teilweise abgebrochene Ausschnittsansicht in einer Blickrichtung nach Pfeil **B** in Fig. 2

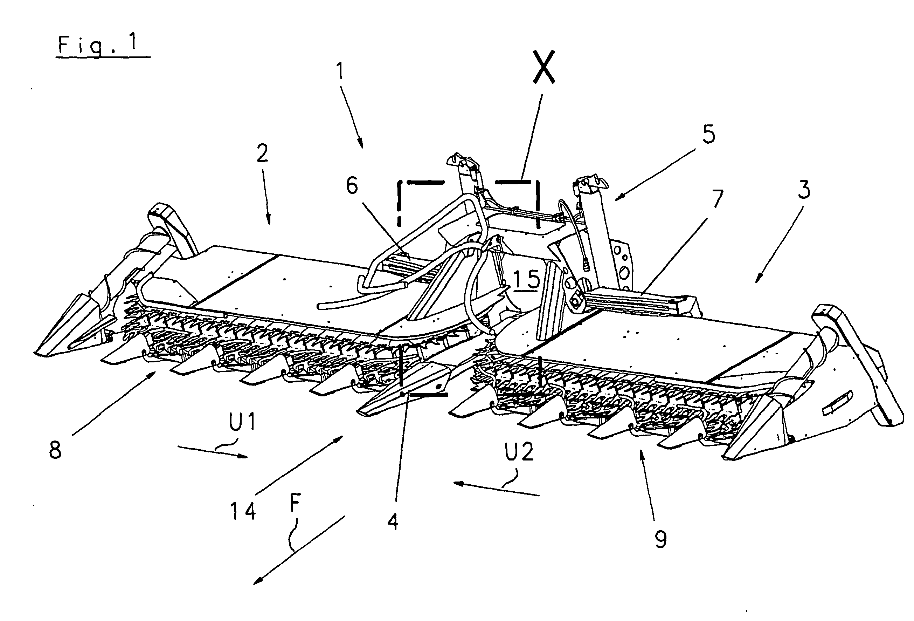

Eine bevorzugte Ausführungsform eines Erntegerätes 1, das insbesondere als Vorsatzgerät für eine mobile Verarbeitungseinrichtung in der Art eines Häckslers zum reihenunabhängigen Ernten von stängelartigem Erntegut wie Mais oder dgl. eingesetzt wird, ist in Fig. 1 näher veranschaulicht und besteht aus zumindest einer und vorzugsweise wie hier dargestellt aus zwei in der längsten Ausrichtung quer zur Fahrt- und Arbeitsrichtung F ausgerichteten Einzugs- und Fördereinrichtungen 2, 3, die so nebeneinander angeordnet sind, dass ein durchgehender Erntegutstreifen mit großer Arbeitsbreite abgeerntet werden kann. Zwischen den Einzugs- und Fördereinrichtungen 2, 3 befindet sich eine mittlere Teilerspitze 4 zur Aufteilung des zu bearbeitenden Erntegutstreifens auf die Einzugs- und Fördereinrichtungen 2, 3. Zur Aufhängung des Erntegerätes 1 an einer Verarbeitungseinrichtung ist ein Tragrahmen 5 vorgesehen. Mit Hilfe der Tragarme 6, 7 können die Einzugs- und Fördereinrichtungen 2, 3 aus der in Fig. 1 dargestellten Arbeits- und Betriebsstellung in eine Transportstellung überführt werden, in der die Einzugs- und Fördereinrichtungen 2, 3 eine in etwa vertikal ausgerichtete (hochgeklappte) Stellung mit einer geringen Transportbreite einnehmen.

Jede Einzugs- und Fördereinrichtung 2, 3 besteht aus einem umlaufenden Endlosförderer 8, 9, welcher von nicht dargestellten und um Drehachsen drehbar gelagerten Antriebsrädern nahe einem Abgabe- und Übergabebereich des Endlosförderers 8, 9 an die Verarbeitungseinrichtung in der Art eines Häckslers sowie von einem nicht dargestellten Umlenkrad in einem äußeren Umlenkbereich führ- und antreibbar ausgebildet ist. Die Umlaufrichtung U1, U2 der Endlosförderer 8, 9, verläuft in etwa quer zur Fahrt- und Arbeitsrichtung F und ist zur Mitte des Emtegerätes 1 hin gerichtet. Weitere denkbare Ausführungen eines Erntegerätes können aber auch so gestaltet sein, dass die Umlaufrichtungen U1, U2 der Endlosförderer 8, 9 entgegen der Fahrt- und Arbeitsrichtung F schräg nach hinten zur Mitte des Erntegerätes verlaufen.

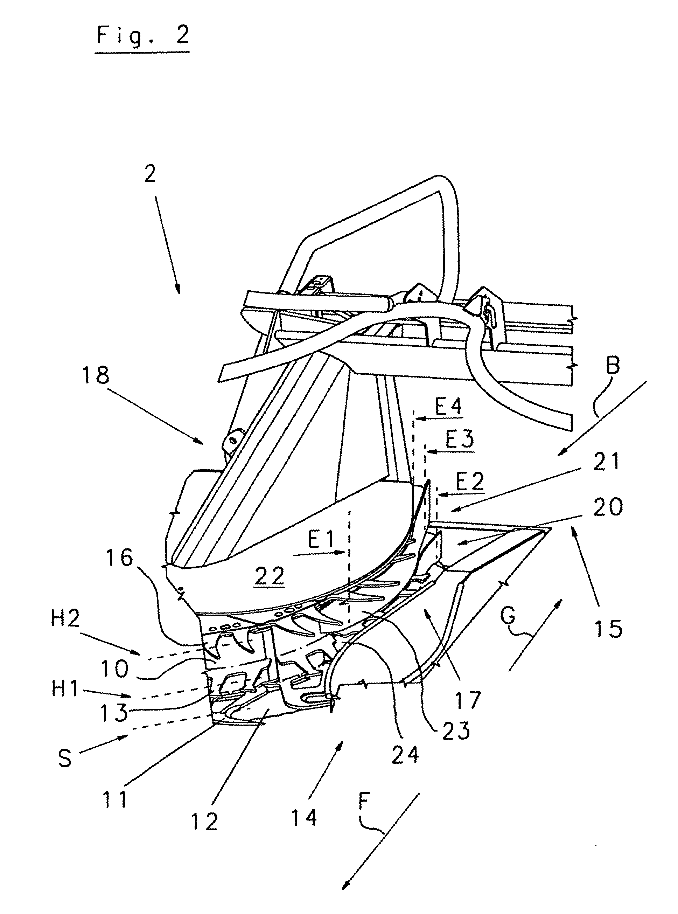

In Fig. 2 ist eine teilweise abgebrochen dargestellte, perspektivische Ansicht in einer entgegen der Fahrt- und Arbeitsrichtung F entsprechenden Blickrichtung auf den inneren Bereich einer Einzugs- und Fördereinrichtung 2, 3 wiedergegeben und zeigt insbesondere den inneren Umlenkbereich eines Endlosförderers 8, 9. Wie aus dieser Darstellung hervorgeht, sind die Endlosförderer 8, 9 aus einer Vielzahl von aneinandergereihten, über endseitige Schwenkachsen miteinander verbundene Förder- und Führungselemente 10 gebildet, die jeweils als einheitliche Funktionseinheiten ausgebildet und in ihrem unteren Bereich mit Schneidelementen 11 versehen sind. Dadurch ist eine Schneidebene S gebildet, in der die Halme des Ernteguts abgetrennt werden. Die Schneidelemente 11 können hierfür beispielsweise winkelmesserartig ausgebildet sein und entweder im freien Schnitt die Halme abtrennen oder mit einer festen oder beweglichen Gegenschneide 12 zusammenwirken.

Oberhalb der Schneidmittelebene S liegt zumindest eine Halteelemente 13 umfassende Halteebene H1, wobei die Halteelemente 13 die Weiterbeförderung der abgetrennten Halme zu dem Zuführungsbereich 14 und von dort in die Eintrittsöffnung 15 der Weiterverarbeitungseinrichtung bewirken. Eine bessere Halterung ergibt sich mit einer zweiten Halteebene H2, die von Halteelementen 16 gebildet ist und die parallel zur ersten Halteebene H1 liegt.

Die Endlosförderer 8, 9, die im Ausführungsbeispiel jeweils zur Mitte hin fördern, also entgegengesetzte Förderrichtungen U1 und U2 haben, weisen entsprechend gegeneinander spiegelsymmetrische Förder- und Führungselemente 10 auf. Die Schneidelemente 11 sind im Ausführungsbeispiel als hakenförmige Messer ausgebildet, wobei in der Innenseite der Haken der Schnitt stattfindet. Auch die Halteelemente 13, 16 sind hakenförmig bzw. schräg ausgebildet um einen sicheren Transport der abgetrennten Halme zu ermöglichen. Die Schneidelemente 11 und die Halteelemente 13,16 können gegenüber den Förder- und Führungselementen 10 als Verschleißstücke austauschbar sein und beispielsweise an letzteren geschraubt oder mit Stiften befestigt sein. Die Schneidelemente 11 wirken mit einer feststehenden Gegenschneide 12 zusammen, wobei durch die Abwinklung der Schneidelemente 11 ein Einziehen der Halme in Richtung dieser Gegenschneide 12 gewährleistet ist.

Das gesamte, von den Endlosförderern 8, 9 beförderte Erntegut sammelt sich im Zuführungsbereich 14 des Erntegerätes 1, wodurch die Gefahr von Störungen wie z. B. Verstopfungen dort am größten ist. Für einen möglichst störungsfreien Erntegutfluss ist die Übergabe der Pflanzenstängel von den Endlosförderern 8, 9 zur Eintrittsöffnung 15 und damit an die Weiterverarbeitungseinrichtung ein besonders kritischer Punkt. Hierzu ist jeweils im Zuführungsbereich 14 eine Abstreifeinrichtung 17 angeordnet, um die Endlosförderer 8, 9 von Erntegut zu räumen und dieses der Eintrittsöffnung 15 zuzuführen.

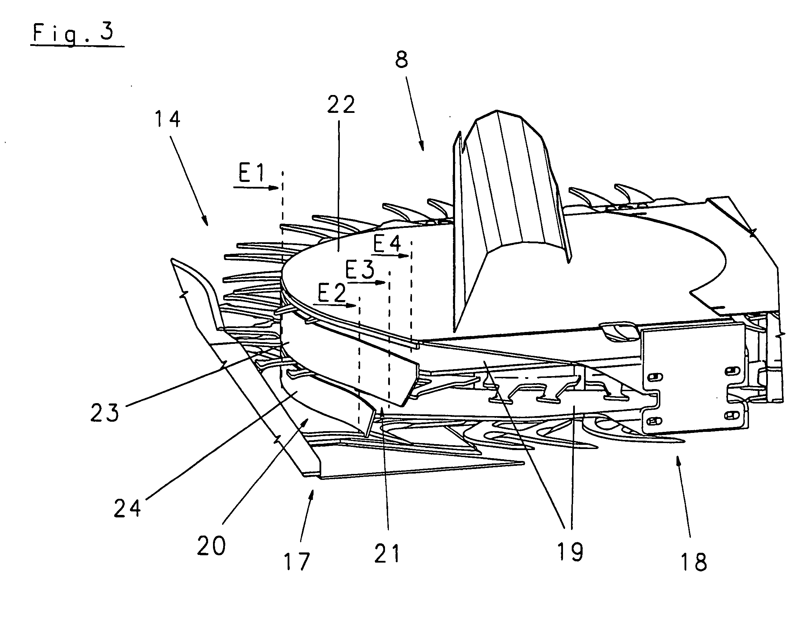

In Fig. 3, welche eine perspektivische, teilweise abgebrochene Ansicht eines inneren Endbereiches einer Einzugs- und Fördereinrichtung 2, 3 von hinten in Blickrichtung der Fahrt- und Arbeitsrichtung F zeigt, ist die Gestaltung der Abstreifeinrichtung 17 gut erkennbar. Die Abstreifeinrichtung 17 weist eine in Fahrtrichtung F rückwärtige Halterung 18 auf, von der aus sich Tragmittel 19, etwa im wesentlichen horizontal verlaufende Bleche, in Fahrtrichtung erstrecken und auf ihrem der Halterung 18 abgewandten Ende die den Schneid- und Halteebenen S, H1, H2 zugeordneten Räumelemente 20, 21 tragen. Die Räumelemente 20, 21 stehen hochkant, sind an die Umlenkung der Endlosförderer 8, 9 im Zuführungsbereich 14 angepasst und erstrecken sich jeweils zwischen zwei Ebenen. Die Förder- und Führungselemente 10 weisen zur besseren Zusammenwirkung mit den Räumelementen 20, 21 der Abstreifeinrichtung 17 geschlossene Vorderflächen auf.

Bei einem Erntegerät 1 mit zwei Endlosförderern 8, 9 sind die Verhältnisse spiegelsymmetrisch, so dass links und rechts der Eintrittsöffnung 15 Abstreifeinrichtungen 17 angeordnet sind, deren Räumelemente 20, 21 sich jeweils in ihrem in Fahrt- und Arbeitsrichtung F zeigenden Endbereichen dem Endlosförderer 8, 9 anpassen und in ihrem weiteren Verlauf entgegen der Fahrt- und Arbeitsrichtung F sich in etwa parallel zu einer vertikalen Fahrzeuglängsmittelebene erstrecken, wobei die Halterungen 18 erfindungsgemäß so weit nach außen außerhalb des Zuführbereiches 14 verlegt wurden, dass sie unter keinen Umständen den Gutfluss behindern.

Die Abstreifeinrichtungen 17 können schwenkbar an den Halterungen 18 angeordnet sein, so dass erstere etwa zu Reinigungs- oder Wartungszwecken von den Förder- und Führungselementen 10 weg verschwenkt werden können. Ein Bewegen in die Funktionsstellung, in der die vorderen Endbereiche der Räumelemente 20, 21 dicht beabstandet vor den Vorderflächen der Förder- und Führungselemente 10 gehalten sind, kann dann durch Federbeaufschlagung und Verwendung von - ggf. einstellbaren - Anschlägen zur Sicherung eines Mindestabstandes erreicht werden. Alternativ können die Halterungen 18 der Abstreifeinrichtungen 17 auch fest ausgeführt sein.

Zwischen den Räumelementen 20, 21 sowie zwischen dem unteren Räumelement 21 und der Gegenschneide 12 und dem oberen Räumelement 20 und einer Abdeckplatte 22, laufen die Halteelemente 13,16 und die Schneidelemente 11 derart, dass sie von den Räumelementen 20, 21 und der Abdeckplatte 22 abgestreift werden. Um durch dieses Abstreifen an den vorgenannten Bauteilen unter bestimmten Erntebedingungen auftretende Anhaftungen von Pflanzenteilen, welche dann bei weiterem Aufbau bis zu Verstopfungen führen können, sicher zu verhindern bzw. rechtzeitig zu beseitigen, sind die Räumelemente 20, 21 nach der Erfindung in einer besonderen Form gestaltet.

In Fig. 2 und 3 ist die unterschiedliche vorteilhafte erfindungsgemäße Form der Räumelemente 20, 21 und der Abdeckplatte 22 deutlich derart zu erkennen, dass die senkrechten Abstreifflächen 23, 24 in dem in Fahrt- und Arbeitsrichtung F zeigenden Endbereich der Räumelemente 20, 21 in einer gemeinsamen senkrechten Ebene E 1 mit der Abstreiflcante der Abdeckplatte 22 liegen, von der sie in ihrem Verlauf in Richtung des Erntegutflusses G zunehmend abweichen und in den senkrechten Ebenen E2 und E3 enden, wobei die obere Abdeckplatte 22 dazu eine weitere Abstreifebene E4 bildet. Durch die erfindungsgemäße Formgebung der Räumelemente 20, 21 bildet sich zum einen eine vorteilhafte Stufenform der Abstreifeinrichtung 17 und zum anderen vergrößern sich dadurch die von den Halteelementen 13, 16 durchlaufenen Schlitze zunehmend in Richtung des Erntegutflusses G. Die Stufenform bildet sich dabei derart aus, dass sich der Zuführungsbereich 14 zwischen den sich spiegelbildlich gegenüberliegenden Endlosförderern (8, 9) im Bereich der Stufenform der Abstreifeinrichtungen 17 nach unten hin verengt. Das bedeutet, dass in der Ansicht von oben jede Stufe sichtbar ist und deshalb auch das Erntegut, welches von den Endlosförderem (8, 9) der Eintrittsöffnung 15 zugeführt wird beim Einziehen in eine Weiterverarbeitungseinrichtung diese Stufen überstreicht und dabei reinigend wirkt. Diese besonders vorteilhaften Merkmale der Erfindung bewirken eine wesentlich verbesserte ständige Reinigung der Abstreifeinrichtung 17 durch das Erntegut. Dieser Effekt wird unter anderem durch den erhöhten Abstreifdruck an den sonst kritischen Kanten der Räumelemente 20, 21 durch die Pflanzenstängel aufgrund der Stufenform noch verstärkt. Des weiteren lösen sich eventuell festsitzende Pflanzenteile im Bereich der Schlitze zwischen den Räumelementen wesentlich besser durch die horizontale Aufweitung in Richtung des Emtegutflusses G. Somit wird durch die Erfindung eine wesentliche Verringerung der Verstopfungsgefahr im Zuführungsbereich 14 des Erntegerätes 1 erzielt und damit die Betriebssicherheit insgesamt verbessert.

## Patentansprüche

1. Erntegerät (1) zum Ernten von Mais oder dergleichen stängelartigem Erntegut, welches zumindest eine Einzugs- und Fördereinrichtung mit einem umlaufenden Endlosförderer (8, 9) mit nach außen gerichteten Schneid- und Halte- und Förderelementen aufweist, die zumindest eine untere Schneidebene (S) und zumindest eine darüber liegende Halteebene (H1, H2) bilden, wobei der Endlosförderer (8, 9) aufgenommenes Erntegut einer Eintrittsöffnung (15) einer Weiterverarbeitungseinrichtung, insbesondere eines Häckslers zuführt und im Zuführungsbereich (14) des Erntegutes zur Eintrittsöffnung (15) eine Abstreifeinrichtung (17) umfasst, welche aus zumindest zwei, jeweils eine Abstreiffläche bildenden Räumelementen (20, 21) besteht, die in ihrem rückwärtigen Bereich über Tragmittel mit einer Halterung verbunden sind, **dadurch gekennzeichnet, dass** die zum Erntegut hin gerichteten, annähernd senkrechten Abstreifflächen (23, 24) der Räumelemente (20, 21) aus ihrer, im in Fahrt- und Arbeitsrichtung (F) zeigenden Endbereich der Räumelemente (20, 21) eine gemeinsame Ebene (E1) bildenden Lage in ihrem Verlauf in Richtung des Erntegutflusses (G) mit zunehmenden Abstand voneinander abweichen.

2. Erntegerät (1) nach Anspruch 1, **dadurch gekennzeichnet, dass** die Abstreifeinrichtung (17) in ihrem Endbereich in Richtung entgegen der Fahrt- und Arbeitsrichtung (F) eine Stufenform aufweist.

3. Erntegerät (1) nach mindestens einem der vorhergehenden Ansprüche, **dadurch gekennzeichnet, dass** die Stufen durch die Räumelemente (20, 21) gebildet werden.

4. Erntegerät (1) nach mindestens einem der vorhergehenden Ansprüche, **dadurch gekennzeichnet, dass** durch eine Abdeckplatte (22) der Einzugs- und Fördereinrichtung (2, 3) eine weitere Stufe gebildet wird.

5. Erntegerät (1) nach mindestens einem der vorhergehenden Ansprüche, **dadurch gekennzeichnet, dass** in der Ansicht von oben in Richtung Erdboden auf das Erntegerät (1), alle Stufen der Abstreifeinrichtung (17) frei sichtbar sind.

6. Erntegerät (1) nach mindestens einem der vorhergehenden Ansprüche, **dadurch gekennzeichnet, dass** die zumindest annähernd senkrechten Abstreifflächen (23, 24) der Räumelemente (20, 21) in ihrem Endbereich in Richtung entgegen der Fahrt- und Arbeitsrichtung (F) in verschiedenen voneinander beabstandeten zumindest annähernd parallelen Ebenen (E2, E3) liegen.

7. Erntegerät (1) nach Anspruch 6, **dadurch gekennzeichnet, dass** das dem Erdboden am nächsten angeordnete Räumelement (20) der Abstreifeinrichtung (17) in seinem Endbereich in Richtung entgegen der Fahrt- und Arbeitsrichtung (F) in der Ebene (E2) liegt, die den geringsten Abstand zu einer vertikalen Fahrzeuglängsmittelebene hat.

8. Erntegerät (1) nach mindestens einem der vorhergehenden Ansprüche, **dadurch gekennzeichnet, dass** die Halterung (18) der Abstreifeinrichtung (17) derart angeordnet ist, dass sie außerhalb des Einflussbereiches des Erntegutstromes (G) liegt.

9. Erntegerät (1) nach mindestens einem der vorhergehenden Ansprüche, **dadurch gekennzeichnet, dass** die Halterung (18) der Abstreifeinrichtung (17) in Fahrt- und Arbeitsrichtung (F) gesehen hinter der Einzugs- und Fördereinrichtung (2, 3) liegt.

## Claims

1. Harvesting device (1) for harvesting maize or the like stalked crops for harvesting, which harvesting device (1) has at least one intake and feeding means having a circulating endless feeder (8, 9) having outwardly directed cutting, holding and feeding elements which create at least one lower cutting plane (S) and at least one holding plane (H1, H2) situated thereabove, the endless feeder (8, 9) feeding crops for harvesting which are picked up to an inlet opening (15) of a means for further processing and in particular a chopper, and the endless feeder (8, 9) comprising, in the region (14) for feeding the crops for harvesting to the inlet opening (15), a wiping-off arrangement (17) which comprises at least two clearing elements (20, 21) each of which forms a wiping-off surface and which, in their rear region, are connected by supporting means to a mounting, **characterised in that** the wiping-off surfaces (23, 24) of the clearing elements (20, 21), which wiping-off surfaces (23, 24) are approximately vertical and face towards the crop for harvesting, diverge from one another at an increasing distance as they extend, from the position in which they form a common plane (E1) **in that** end region of the clearing elements (20, 21) which points in the direction of travel and working (F), in the direction in which the flow (G) of the crops for harvesting takes place.

2. Harvesting device according to claim 1, **characterised in that** the wiping-off arrangement (17) is of a stepped form in its end region in the opposite direction to the direction of travel and working (F).

3. Harvesting device according to at least one of the foregoing claims, **characterised in that** the steps are formed by the clearing elements (20, 21).

4. Harvesting device according to at least one of the foregoing claims, **characterised in that** a further step is formed by a covering plate (22) belonging to the intake and feeding means (2, 3).

5. Harvesting device according to at least one of the foregoing claims, **characterised in that**, when the harvesting device (1) is viewed from above looking towards the ground, all the steps of the wiping-off means (17) are clearly visible.

6. Harvesting device according to at least one of the foregoing claims, **characterised in that**, in their end region in the opposite direction from the direction of travel and working (F), the at least approximately vertical wiping-off surfaces (23, 24) of the clearing elements (20, 21) are situated in different, at least approximately parallel planes (E2, E3) which are spaced away from one another.

7. Harvesting device according to claim 6, **characterised in that** the clearing element (20) arranged closest to the ground of the wiping-off arrangement (17) lies, in its end region in the direction opposite to the direction of travel and working (F), in the plane (E2) which is at the shortest distance from a vertical longitudinal centre plane of the vehicle.

8. Harvesting device according to at least one of the foregoing claims, **characterised in that** the mounting (18) of the wiping-off arrangement (17) is so arranged that it is outside the region affected by the flow (G) of the crops for harvesting.

9. Harvesting device according to at least one of the foregoing claims, **characterised in that**, looking in the direction of travel and working (F), the mounting (18) of the wiping-off arrangement (17) is situated behind the intake and feeding means (2, 3).

## Revendications

1. Récolteuse (1) pour récolter du maïs ou autres produits à tige, comportant au moins une installation de prise et de transfert avec un convoyeur sans fin (8, 9), tournant, ayant des éléments de coupe, de maintien et de transfert, tournés vers l'extérieur, formant au moins un plan inférieur de coupe (S) et au moins un plan de maintien (H1, H2) situé au-dessus, dans laquelle
le convoyeur sans fin (8, 9) conduit les produits de récolte reçus à une ouverture d'entrée (15) d'une installation de traitement en aval notamment d'une ensileuse, et dans la zone d'alimentation (14) des produits de récolte vers l'orifice d'entrée (15) il comprend une installation de raclage (17) composée d'au moins deux éléments de dégagement (20, 21) formant chacun une surface de raclage, ces éléments étant reliés à un support au niveau de leur zone arrière par des éléments porteurs,
**caractérisée en ce que**
les surfaces de raclage (23, 24) des éléments de dégagement (20, 21) sensiblement perpendiculaires au produits de récolte, à partir de leur position formant un plan commun (E1) dans la zone d'extrémité des éléments de dégagement (20, 21) dirigée vers la direction de déplacement et de travail (F), dévient au cours de leur trajet en direction du flux de produits récoltés (G), avec un écart croissant.

2. Récolteuse (1) selon la revendication 1,
**Caractérisée en ce que**
l'installation de raclage (17) présente une forme de gradin dans sa zone d'extrémité dans la direction opposée à la direction de déplacement et de travail (F).

3. Récolteuse (1) selon l'une quelconque des revendications précédentes,
**caractérisée en ce que**
les gradins sont formés par les éléments de dégagement (20, 21).

4. Récolteuse (1) selon l'une quelconque des revendications précédentes,
**caractérisée par**
une plaque de couverture (22) de l'installation de prise et de transfert (2, 3) qui forme un autre gradin.

5. Récolteuse (1) selon l'une quelconque des revendications précédentes,
**caractérisée en ce qu'**
en vue de dessus en direction du sol sur la récolteuse (1), tous les gradins de l'installation de raclage (17) sont visibles librement.

6. Récolteuse (1) selon l'une quelconque des revendications précédentes,
**caractérisée en ce que**
les surfaces de raclage (23, 24) au moins sensiblement verticales des éléments de dégagement (20, 21) sont situées dans leur zone d'extrémité, dans des directions opposées à la direction de déplacement et de travail (F), dans différents plans (E2, E3), écartés et au moins sensiblement parallèles.

7. Récolteuse (1) selon la revendication 6,
**caractérisée en ce que**
l'élément de dégagement (20) de l'installation de raclage (17) qui est le plus proche du sol, se situe dans sa zone d'extrémité dans la direction opposée à la direction de déplacement et de travail (F), dans le plan (E2) qui est à la plus faible distance du plan médian longitudinal vertical du véhicule.

8. Récolteuse (1) selon l'une quelconque des revendications précédentes,
**caractérisée en ce que**
le support (18) de l'installation de raclage (17) est installé pour se situer à l'extérieur de la plage d'influence du flux de produit de récolte (G).

9. Récolteuse (1) selon l'une quelconque des revendications précédentes,
**caractérisée en ce que**
le support (18) de l'installation de raclage (17) se situe derrière l'installation de prise et de transfert (2, 3) dans la direction de déplacement et de travail (F).
